# EUROPEAN PATENT SPECIFICATION

(11) **EP 3 486 179 B1**
(45) Date of publication and mention of the grant of the patent: **31.08.2022**
(21) Application number: 18206715.7
(22) Date of filing: 16.11.2018
(51) Int. Cl.: B64F 3/02, H02J 50/10, H02J 50/90

(54) **INPECTING UTILITIES BY MEANS OF AN UNMANNED AERIAL VEHICLE AND CHARGING A RECHARGEABLE BATTERY OF THE VEHICLE IN FLIGHT USING A HIGH VOLTAGE POWER LINE AND METHOD AND APPARATUS FOR GENERATING A FLIGHT PLAN FOR THE VEHICLE**
ÜBERPRÜFEN VON INSTALLATIONEN MIT HILFE EINES UNBEMANNTEN LUFTFAHRZEUGS UND LADEN EINER WIEDERAUFLADBAREN BATTERIE WÄHREND DES FLUGES ENTLANG EINER HOCHSPANNUNGSLEITUNG
INSPECTION D'INSTALLATIONS AU MOYEN D'UN VÉHICULE AÉRIEN SANS ÉQUIPAGE ET CHARGEMENT D'UNE BATTERIE RECHARGEABLE DU VÉHICULE EN VOL LE LONG D'UNE LIGNE ÉLECTRIQUE À HAUTE TENSION, ET PROCÉDÉ ET APPAREIL POUR GÉNÉRER UN PLAN DE VOL POUR LE VÉHICULE

(30) Priority: 16.11.2017 US 201715815689; 15.12.2017 NL 2020097
(43) Date of publication of application: 22.05.2019
(73) Proprietor: The Boeing Company, Chicago, IL 60606-2016 (US)
(72) Inventor: Jaugilas, John M., Chicago, IL 60606 (US)
(74) Representative: Hylarides, Paul Jacques

(56) References cited:
- US-A1- 2015 226 559
- US-A1- 2016 214 715
- US-B1- 9 162 753
- US-B1- 9 421 869

## Description

### BACKGROUND INFORMATION

The present disclosure relates generally to flying an unmanned aerial vehicle and, more specifically, to charging a rechargeable battery of an unmanned aerial vehicle in-flight. Yet more specifically, the present disclosure relates to charging a rechargeable battery of an unmanned aerial vehicle using a high voltage power line while the unmanned aerial vehicle is in-flight.

Batteries are used to power unmanned aerial vehicles. Flight times and flight distances for unmanned aerial vehicles are affected by battery life. Increasing battery capacity increases available power, but also increases the weight of the unmanned aerial vehicle.

US 9 162 753 B describes in its abstract an unmanned aerial vehicle and associated methods for inspecting infrastructure assets includes a multirotor, electrically driven helicopter apparatus and power supply; a flight computer; positioning and collision avoidance equipment; and at least one sensor such as a camera. The flight computer is programmed for automated travel to and inspection of selected waypoints, at which condition data is collected for further analysis. The method also includes protocols for segmenting the flight path to accomplish sequential inspection of a linear asset such as a power line using limited-range equipment.

US 9 421 869 B describes in its abstract a power unmanned aerial vehicle (UAV) that may generate a current from a magnetic field of an overhead power line. In various implementations, while the power UAV is flying, the power UAV may receive another UAV at a platform. A control element of the power UAV may generate signals to cause the power UAV to fly to a location of a conductor of the power line. The control element may also determine a position of the secondary coil with respect to the power line and generate control signals to adjust the position of the secondary coil based on the determined position of the secondary coil, a determined safety distance, and/or a determined threshold distance for efficient current generation. A shielding substrate may also be provided to shield electronics of the power UAV or other UAVs from magnetic fields.

US 2015/0226559 A1 describes in its abstract a system and method for providing autonomous navigation for an Autonomous Vehicle such as an Unmanned Air Vehicle (UAV) or an Autonomous Underwater Vehicle (AUV ) in the vicinity of power lines or other signal carrying lines or underwater cable is presented. Autonomous navigation is achieved by measuring the magnitude and phase of the electromagnetic field at an unknown location within a space under excitation by a set of power cables of the power line with one or more orthogonal electromagnetic sensors formed on the AV; and estimating parameters related to a position and orientation of the AV, and load parameters of each cable based on the residual error between the measured set of complex electromagnetic field values corresponding to a combined model of the set of power cables.

US 2016/0214715 A1 describes in its abstract systems, methods and devices for detecting airborne particulates and/or gases at remote oil and natural gas sites, such as wells, and/or processing and refinery plants. One such system comprises an unmanned aerial vehicle (UAV), such as a drone aircraft, configured for aerial dispatch to the remote site and wireless connection to an external processor, cloud apparatus or the like. The UAV includes one or more on-board sensors configured to detect airborne particulates or gases, such as methane gas, hydrogen sulfide, hydrocarbons, weather conditions, ground-based elements or compounds or the like. The on-board sensors may comprise light transmitters, such as lasers, configured for transmitting light or laser pulses into the ambient environment around the remote site and detecting backscatter to detect the concentration and/or velocity vector( s) of the airborne particulates or gases. The UAV is further configured to wirelessly transmit data associated with the airborne particulates or gases to the external processor or cloud apparatus in real-time.

Therefore, it would be desirable to have a method and apparatus that take into account at least some of the issues discussed above, as well as other possible issues. Such method is described in the appended claims, which determine the scope of protection.

An illustrative embodiment of the present disclosure provides a method of monitoring utilities within a right-of-way. A rechargeable battery of an unmanned aerial vehicle is charged using an electromagnetic field of a high voltage power line within the right-of-way and a recharging system of the unmanned aerial vehicle. The unmanned aerial vehicle is flown a specified distance from the high voltage power line during the charging. Utilities are inspected using a sensor of the unmanned aerial vehicle while flying the unmanned aerial vehicle the specified distance from the high voltage power line.

An illustrative embodiment of the present disclosure provides a method of generating a flight plan for an unmanned aerial vehicle including charging a rechargeable battery of the unmanned aerial vehicle. Mission data for the unmanned aerial vehicle, including a plurality of locations for the unmanned aerial vehicle, is received. A path for the unmanned aerial vehicle including the plurality of locations is calculated using a processor. An initial flight plan is created for the unmanned aerial vehicle that includes the path and operational settings for the unmanned aerial vehicle. A fuel consumption associated with the initial flight plan is calculated, the fuel consumption including energy expended and energy generated by the unmanned aerial vehicle. It is determined whether fuel consumption is greater than an available energy of the unmanned aerial vehicle, the available energy comprising an existing charge of the rechargeable battery and the energy generated by the unmanned aerial vehicle flying the initial flight plan. The initial flight plan is selected as the flight plan when the fuel consumption is not greater than the available energy. An adjusted flight plan is created for the unmanned aerial vehicle when the fuel consumption is greater than the available energy, wherein creating the adjusted flight plan includes increasing a portion of the flight plan wherein the unmanned aerial vehicle flies a specified distance from a high voltage power line. An adjusted fuel consumption associated with the adjusted flight plan is calculated. It is determined whether the adjusted fuel consumption is greater than an adjusted available energy, wherein the adjusted available energy comprises the existing charge of the rechargeable battery and energy generated by the unmanned aerial vehicle flying the adjusted flight plan. The adjusted flight plan is selected as the flight plan when the adjusted fuel consumption is not greater than the adjusted available energy.

An illustrative embodiment of the present disclosure provides an apparatus for generating a flight plan for an unmanned aerial vehicle, the apparatus comprises a flight plan generator. The flight plan generator is configured to receive mission data for the unmanned aerial vehicle, including a plurality of locations for the unmanned aerial vehicle; calculate a path for the unmanned aerial vehicle including the plurality of locations; create an initial flight plan for the unmanned aerial vehicle that includes the path and operational settings for the unmanned aerial vehicle; calculate a fuel consumption associated with the initial flight plan, the fuel consumption including energy expended and energy generated by the unmanned aerial vehicle; determine whether fuel consumption is greater than an available energy of the unmanned aerial vehicle, the available energy comprising an existing charge of the rechargeable battery and the energy generated by the unmanned aerial vehicle flying the initial flight plan; and selecting the initial flight plan as the flight plan when the fuel consumption is not greater than the available energy; create an adjusted flight plan for the unmanned aerial vehicle when the fuel consumption is greater than the available energy, wherein creating the adjusted flight plan includes increasing a portion of the flight plan wherein the unmanned aerial vehicle flies a specified distance from a high voltage power line; calculate an adjusted fuel consumption associated with the adjusted flight plan; determine whether the adjusted fuel consumption is greater than an adjusted available energy, wherein the adjusted available energy comprises the existing charge of the rechargeable battery and energy generated by the unmanned aerial vehicle flying the adjusted flight plan; and select the adjusted flight plan as the flight plan when the adjusted fuel consumption is not greater than the adjusted available energy.

In some further embodiments, the flight plan generator is present on the unmanned aerial vehicle.

In alternative embodiments, the apparatus comprises a communication system configured to transmit the flight plan to the unmanned aerial vehicle.

In further embodiments, the apparatus further comprises a database containing aeronautical information for at least one of flight restricted areas or utility lines, wherein the flight plan generator is configured to create the adjusted flight plan while avoiding restricted areas.

It will be appreciated that further aspects and embodiments are described herein, which may include one or more features as described above.

The features and functions can be achieved independently in various embodiments of the present disclosure or may be combined in yet other embodiments in which further details can be seen with reference to the following description and drawings.

The disclosure also includes the following examples, whereby it is noted that the extent of protection conferred shall be determined by the appended claims.

In a first example, a method comprises:
charging (502) a rechargeable battery (114) of an unmanned aerial vehicle (110) using an electromagnetic field (152) of a high voltage power line (146) and a recharging system (120) of the unmanned aerial vehicle (110); and
flying (504) the unmanned aerial vehicle (110) a specified distance (158) from the high voltage power line (146) during the charging.

Optionally, in the method of the first example, the specified distance (158) is a maximum length from the high voltage power line (146) while maintaining a pre-defined value for efficiency (126) of the recharging system (120) of the unmanned aerial vehicle (110).

Optionally, in the method of the first example, the specified distance (158) is selected to maintain a charge level (124) of the rechargeable battery (114).

Optionally, in the method of the first example, charging (506) the rechargeable battery (114) comprises generating energy by positioning an inductor (116) of the recharging system (120) into the electromagnetic field (152) of the high voltage power line (146).

Optionally, in the method of the first example, it further comprises:
determining (514) weather conditions (178) along a path for the unmanned aerial vehicle (110); and
selecting (516) the specified distance (158) based on the weather conditions (178).

Optionally, in the method of the first example, it further comprises:
detecting (518) a field strength (176) of the electromagnetic field (152) of the high voltage power line (146); and
determining (520) an operation status (174) of the high voltage power line (146) using the field strength (176).

Optionally, in the method of the first example, it further comprises:
detecting (518) a field strength (176) of the electromagnetic field (152) of the high voltage power line (146); and
selecting (522) the specified distance (158) from the high voltage power line (146) based on the field strength (176).

Optionally, in the method of the first example, it further comprises:
detecting (524) the high voltage power line (146) using an impact prevention sensor (118); and
maintaining (526) the unmanned aerial vehicle (110) the specified distance (158) from the high voltage power line (146) during charging using measurements (128) from the impact prevention sensor (118).

Optionally, in the method of the first example, the impact prevention sensor (118) is one of a SONAR sensor (130), a RADAR sensor (132), an optical sensor (134), or a field strength sensor (136).

Optionally, in the method of the first example, charging the rechargeable battery (114) of the unmanned aerial vehicle (110) using an electromagnetic field (152) of the high voltage power line (146) increases a range (112) of the unmanned aerial vehicle (110).

In a second example, a method comprises:
identifying (602) a route (144) of a high voltage power line (146) through a region (108); and
creating (604) a flight plan (150) for an unmanned aerial vehicle (110) such that the unmanned aerial vehicle (110) charges a rechargeable battery (114) of the unmanned aerial vehicle (110) using an electromagnetic field (152) of the high voltage power line (146) for at least a portion of the flight plan (150).

Optionally, in the method of the second example, a method of the first example is used.

Optionally, in the method of the second example, it further comprises:
communicating (606) the flight plan (150) to the unmanned aerial vehicle (110); and
flying (608) the unmanned aerial vehicle (110) according to the flight plan (150) while maintaining the unmanned aerial vehicle (110) at least a specified distance (158) from the high voltage power line (146) during charging using measurements (128) from an impact prevention sensor (118) of the unmanned aerial vehicle (110).

Optionally, in the method of the second example, it further comprises:
increasing (610) a range (112) of the unmanned aerial vehicle (110) over a range from a single charge of the rechargeable battery (114) by flying the unmanned aerial vehicle (110) the specified distance (158) from the high voltage power line (146).

Optionally, in the method of the second example, it further comprises:
detecting (612) a field strength (176) of the electromagnetic field (152) of the high voltage power line (146) with the unmanned aerial vehicle (110) in-flight; and
determining (614) an operation status (174) of the high voltage power line (146) using the field strength (176).

In a third example, a method comprises:
positioning (702) an unmanned aerial vehicle (110) within an electromagnetic field (152) of a high voltage power line (146);
generating (704) energy with an inductor (116) attached to the unmanned aerial vehicle (110) while the unmanned aerial vehicle (110) is in flight; and
directing (706) the energy generated by the inductor (116) to a rechargeable battery (114) of the unmanned aerial vehicle (110).

Optionally, in the method of the third example, a method of the first or second example is used.

Optionally, in the method of the third example, it further comprises:
redirecting (708) the unmanned aerial vehicle (110) from a shorter flight plan (418) to a flight plan (420) with at least a portion within the electromagnetic field (152) of the high voltage power line (146), wherein positioning the unmanned aerial vehicle (110) within the electromagnetic field (152) comprises flying the unmanned aerial vehicle (110) along the flight plan (420).

Optionally, in the method of the third example, positioning (710) the unmanned aerial vehicle (110) within the electromagnetic field (152) of the high voltage power line (146) comprises flying the unmanned aerial vehicle (110) along a route (144) of the high voltage power line (146).

Optionally, in the method of the third example, positioning (712) the unmanned aerial vehicle (110) within the electromagnetic field (152) of the high voltage power line (146) comprises flying the unmanned aerial vehicle (110) a specified distance (158) from the high voltage power line (146).

Optionally, in the method of the third example, (714) the specified distance (158) is a maximum length from the high voltage power line (146) while maintaining a pre-defined value for efficiency (126) of a recharging system (120) of the unmanned aerial vehicle (110).

Optionally, in the method of the third example, (716) the specified distance (158) is selected to maintain a charge level (124) of the rechargeable battery (114).

In a fourth example, an unmanned aerial vehicle (110) comprises:
a rechargeable battery (114);
an inductor (116) electrically connected to the rechargeable battery (114); and
an impact prevention sensor (118).

Optionally, in the unmanned aerial vehicle (110) of the fourth example, the impact prevention sensor (118) is one of a SONAR sensor (130), a RADAR sensor (132), an optical sensor (134), or a field strength sensor (136).

Optionally, in the unmanned aerial vehicle (110) of the fourth example, it further comprises:
a controller (180) configured to fly the unmanned aerial vehicle (110) such that the inductor (116) charges the rechargeable battery (114) using an electromagnetic field (152) of a high voltage power line (146) while flying the unmanned aerial vehicle (110) a specified distance (158) from the high voltage power line (146).

### BRIEF DESCRIPTION OF THE DRAWINGS

The novel features believed characteristic of the illustrative embodiments are set forth in the appended claims, which determine the scope of protection. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of an environment in which an aerial vehicle flies using a flight plan taking into account a route of a high voltage power line in accordance with an illustrative embodiment;
**Figure 2** is an illustration of a region with a high voltage power line in accordance with an illustrative embodiment;
**Figure 3** is an illustration of an unmanned aerial vehicle flying in a region with a high voltage power line in accordance with an illustrative embodiment;
**Figure 4** is an illustration of a map of a region with high voltage power lines in accordance with an illustrative embodiment;
**Figure 5** is an illustration of a flowchart of a method for flying an unmanned aerial vehicle in a region in accordance with an illustrative embodiment;
**Figure 6** is an illustration of a flowchart of a method for creating a flight plan for an unmanned aerial vehicle in a region in accordance with an illustrative embodiment;
**Figure 7** is an illustration of a flowchart of a method for flying an unmanned aerial vehicle in a region in accordance with an illustrative embodiment;
**Figure 8** is an illustration of a block diagram of a flight plan generator in accordance with an illustrative embodiment;
**Figure 9** is an illustration of a flowchart of a method of monitoring utilities within a right-of-way in accordance with an illustrative embodiment; and
**Figures 10A** **and** **10B** is an illustration of a flowchart of a method of generating a flight plan for an unmanned aerial vehicle including charging a rechargeable battery of the unmanned aerial vehicle in accordance with an illustrative embodiment.

### DETAILED DESCRIPTION

The following illustrative examples, which may also be referred to as illustrative embodiments, recognize and take into account one or more different considerations. For example, the illustrative embodiments recognize and take into account that unmanned aerial vehicles are advantageous in several scenarios. The illustrative embodiments recognize and take into account that unmanned aerial vehicles can be used for delivery of packages by a store or vendor. The illustrative embodiments recognize and take into account that unmanned aerial vehicles can be used for delivery of fast food orders. The illustrative embodiments recognize and take into account that unmanned aerial vehicles can be used for transport of human or animal passengers. The illustrative embodiments recognize and take into account that unmanned aerial vehicles can be used for inspection and monitoring of utilities such as pipelines. The illustrative embodiments recognize and take into account that unmanned aerial vehicles can be used for surveillance and/or reconnaissance.

The illustrative embodiments recognize and take into account that unmanned aerial vehicles are often powered with electric motors. The illustrative embodiments recognize and take into account that unmanned aerial vehicles with electric motors also have rechargeable batteries.

The illustrative embodiments recognize and take into account that charging during flight may reduce charging time on the ground. The illustrative embodiments recognize and take into account that reducing charging time on the ground increases the time an unmanned aerial vehicle may be in flight. The illustrative embodiments further recognize and take into account that charging during flight may result in increasing a range of an unmanned aerial vehicle. Increasing the range of an unmanned aerial vehicle may increase at least one of the number of areas that may be serviced by the unmanned aerial vehicle, or the time an unmanned aerial vehicle may be used.

The illustrative embodiments recognize and take into account that high voltage power lines emit an Electro Magnetic Field (EMF). The illustrative embodiments further recognize and take into account that for high voltage power lines, the EMF is so strong that flying some types of model aircraft near high voltage lines is prohibited. The illustrative embodiments recognize and take into account that passing an inductor, such as a coil or a wire, through an EMF generates electrical voltage and current.

The illustrative embodiments recognize and take into account that because general and commercial aviation flights keep away from power lines, recharging using high voltage power lines avoids flying in airspace normally used by airplanes and ultralight vehicles.

The illustrative embodiments recognize and take into account that unmanned aerial vehicles (UAVs) may fly along utility lines to check for damage or sabotage. The illustrative embodiments recognize and take into account that high voltage power lines are positioned within right-of-ways. In some illustrative examples, right-of-ways may be referred to as easements, or areas designated for paths for utilities. The illustrative embodiments recognize and take into account that multiple types of utilities may be present in a right-of-way. For example, at least one of the high voltage power line, a water pipe, a waterway, a gas pipe, a solar panel, or an oil pipe may be present in the same right-of-way. Solar panels are positioned above ground to gather solar power. Other utilities, such as at least one of the high voltage power line, a water pipe, a waterway, a gas pipe, or an oil pipe may be at least one of above ground or buried. A waterway, such as a canal, a river, a ditch, a stream, creek, a bayou, or any other desirable type of waterway may be used to at least one of transport water or generate power. The illustrative embodiments recognize and take into account that often underground utilities or pipelines to be monitored are buried in the same easements as high voltage power lines. The illustrative embodiments recognize and take into account that high voltage power lines may either be buried within the same easement as or run above ground along the same path as other utilities.

An illustrative embodiment of the present disclosure provides a method. A rechargeable battery of an unmanned aerial vehicle is charged using an electromagnetic field of a high voltage power line and a recharging system of the unmanned aerial vehicle. The unmanned aerial vehicle is flown a specified distance from the high voltage power line during the charging.

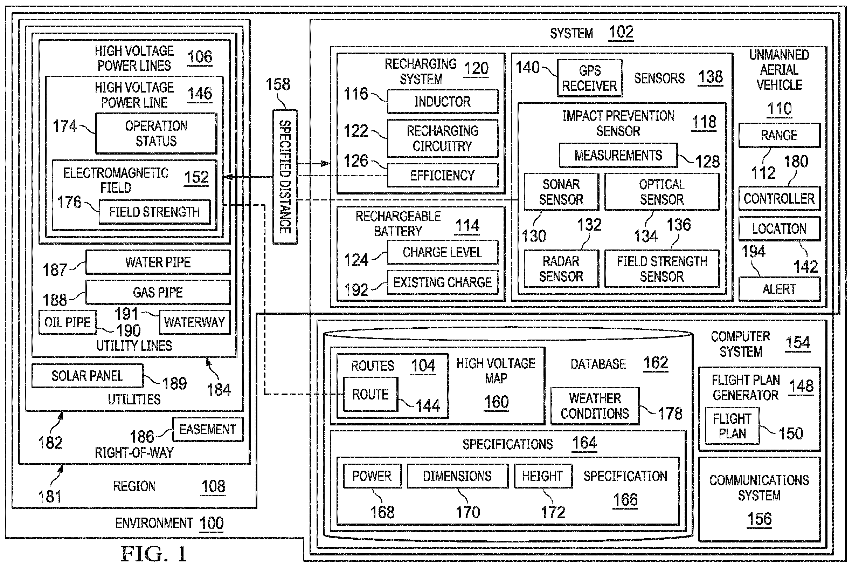

Referring now to the figures and, in particular, with reference to **Figure 1****,** an illustration of a block diagram of an environment in which an aerial vehicle flies using a flight plan taking into account a route of a high voltage power line is depicted in accordance with an illustrative embodiment. Environment **100** contains system **102** for taking into account routes **104** of high voltage power lines **106** in region **108** when flying unmanned aerial vehicle **110** in region **108.**

In some illustrative examples, system **102** increases range **112** of unmanned aerial vehicle **110.** In these illustrative examples, system **102** takes into account routes **104** of high voltage power lines **106** to charge rechargeable battery **114** and increase range **112.**

Unmanned aerial vehicle **110** comprises rechargeable battery **114,** inductor **116** electrically connected to rechargeable battery **114,** and impact prevention sensor **118.**

Inductor **116** is part of recharging system **120** configured to recharge rechargeable battery **114.** Recharging circuitry **122** of recharging system **120** electrically connects inductor **116** to rechargeable battery **114.** Recharging circuitry **122** controls charging of rechargeable battery **114.** In some illustrative examples, recharging circuitry **122** monitors charge level **124** of rechargeable battery **114.** In some illustrative examples, recharging circuitry **122** controls charging of rechargeable battery **114** based on efficiency **126** of recharging.

Impact prevention sensor **118** monitors region **108** near unmanned aerial vehicle **110.** Unmanned aerial vehicle **110** takes into account measurements **128** from impact prevention sensor **118,** preventing unmanned aerial vehicle **110** from impacting objects, such as high voltage power lines **106.** Unmanned aerial vehicle **110** may change at least one of altitude, flight direction, or speed to avoid obstacles based on measurements **128.**

As used herein, the phrase "at least one of," when used with a list of items, means different combinations of one or more of the listed items may be used, and only one of each item in the list may be needed. In other words, "at least one of' means any combination of items and number of items may be used from the list, but not all of the items in the list are required. The item may be a particular object, a thing, or a category.

For example, "at least one of item A, item B, or item C" may include, without limitation, item A, item A and item B, or item B. This example also may include item A, item B, and item C, or item B and item C. Of course, any combination of these items may be present. In other examples, "at least one of' may be, for example, without limitation, two of item A, one of item B, and ten of item C; four of item B and seven of item C; or other suitable combinations.

Impact prevention sensor **118** takes any desirable form. In some illustrative examples, impact prevention sensor **118** is one of SONAR sensor **130,** RADAR sensor **132,** optical sensor **134,** or field strength sensor **136.**

In some illustrative examples, impact prevention sensor **118** is one of sensors **138.** Sensors **138** include any other desirable type of sensors. As depicted, sensors **138** includes GPS receiver **140.** GPS receiver **140** is used to determine location **142** of unmanned aerial vehicle **110** within region **108.**

System **102** uses high voltage power lines **106** of region **108** to charge rechargeable battery **114** of unmanned aerial vehicle **110.** Unmanned aerial vehicle **110** recharges rechargeable battery **114** while in flight.

System **102** identifies route **144** of high voltage power line **146** through region **108.** High voltage power line **146** is one of high voltage power lines **106** in region **108.** Flight plan generator **148** creates flight plan **150** for unmanned aerial vehicle **110** such that unmanned aerial vehicle **110** charges rechargeable battery **114** of unmanned aerial vehicle **110** using electromagnetic field **152** of high voltage power line **146** for at least a portion of flight plan **150.** Flight plan **150** also meets any objectives or destinations for unmanned aerial vehicle **110.**

Computer system **154** communicates flight plan **150** to unmanned aerial vehicle **110** using communications system **156.** In these illustrative examples, communications system **156** is configured to transmit flight plan **150** to unmanned aerial vehicle **110** from flight plan generator **148.** Unmanned aerial vehicle **110** is flown according to flight plan **150** while maintaining unmanned aerial vehicle **110** at least specified distance **158** from high voltage power line **146** using measurements **128** from impact prevention sensor **118** of unmanned aerial vehicle **110.** Unmanned aerial vehicle **110** is flown specified distance **158** from high voltage power line **146** during the charging. In some illustrative examples, flight plan **150** includes portions that do not charge rechargeable battery **114.** In these "non-charging" portions, unmanned aerial vehicle **110** is flown greater than specified distance **158** from high voltage power line **146.**

Specified distance **158** is a desired distance that unmanned aerial vehicle **110** will be flown from high voltage power lines **106** during charging. By flying unmanned aerial vehicle **110** specified distance **158** from high voltage power line **146,** range **112** of unmanned aerial vehicle **110** is increased over a range from a single charge of rechargeable battery **114.** As used herein, flying unmanned aerial vehicle **110** is performed when unmanned aerial vehicle **110** is airborne. Flying unmanned aerial vehicle **110** may include any of takeoffs, landings, hovering, changes in altitude, or movements in latitude or longitude.

Unmanned aerial vehicle **110** is maintained at least specified distance **158** from high voltage power line **146** using controller **180** and impact prevention sensor **118.** Impact prevention sensor **118** provides measurements **128** from which the actual distance between high voltage power line **146** and unmanned aerial vehicle **110** is determined. In some illustrative examples, aerial vehicle **110** will maintain an approximately constant distance from high voltage power line **146.** In other illustrative examples, aerial vehicle **110** will maintain an approximately constant such that unmanned aerial vehicle **110** may have a variable distance from high voltage power line **146..**

Specified distance **158** has any desirable value. In some examples, specified distance **158** includes a range of desirable values. In some illustrative examples, specified distance **158** is up to 200 meters. Specified distance **158** may be increased or decreased based upon specification **166** for high voltage power line **146.** Specified distance **158** may be increased or decreased based on field strength **176** of electromagnetic field **152.** In some illustrative examples, specified distance **158** is in the range of ten centimeters to 100 meters. In some illustrative examples, specified distance **158** is in the range of one meter to 50 meters.

Route **144** of high voltage power line **146** in region **108** is depicted in high voltage map **160.** High voltage map **160** is present in database **162** of computer system **154.** To create flight plan **150,** flight plan generator **148** uses high voltage map **160.**

In some illustrative examples, additional information regarding high voltage power lines **106** is stored in database **162.** Specifications **164** for high voltage power lines **106** are optionally stored in database **162.** Specifications **164** include any desirable characteristics of high voltage power lines **106.**

Database **162** includes any desirable aeronautical information including at least one of weather or flight restricted areas.

As depicted, specification **166** of high voltage power line **146** includes power **168,** dimensions **170,** and height **172.** Power **168** includes amperage or any other measurements for high voltage power line **146.** Dimensions **170** include dimensions of the wires, platforms, and towers. Height **172** includes whether high voltage power line **146** is above ground or below ground and a distance high voltage power line **146** is above or below ground.

In some illustrative examples, unmanned aerial vehicle **110** is used to determine operation status **174** of high voltage power line **146.** In some illustrative examples, field strength **176** of electromagnetic field **152** of high voltage power line **146** is detected with unmanned aerial vehicle **110** in-flight. In some illustrative examples, field strength **176** of electromagnetic field **152** is determined using field strength sensor **136.** Operation status **174** of high voltage power line **146** is determined using field strength **176.**

In some illustrative examples, to determine operation status **174,** specification **166** of high voltage power line **146** is taken into account. A field strength, such as field strength **176,** measured by field strength sensor **136,** is dependent on at least one of specified distance **158,** power **168** of high voltage power line **146,** or other characteristics.

Unmanned aerial vehicle **110** flies relative to high voltage power line **146** using flight plan **150.** Flight plan **150** may take into account any desirable properties such as weather conditions **178,** a type of unmanned aerial vehicle **110,** or capabilities of unmanned aerial vehicle **110.** In some illustrative examples, weather conditions **178** are received from weather reports (not depicted). In some illustrative examples, a set value for specified distance **158** is part of flight plan **150.**

Specified distance **158** may be selected based on any desirable characteristics. In some illustrative examples, specified distance **158** is selected based on weather conditions **178.** For example, specified distance **158** is greater when weather conditions **178** include strong winds. Strong winds may push unmanned aerial vehicle **110** towards high voltage power line **146.** Specified distance **158** is increased to compensate for strong winds. As another example, specified distance **158** may be greater when weather conditions **178** include thunderstorms. Thunderstorms may include static electricity and naturally occurring electromagnetic fields. Field strength sensor **136** may detect the naturally occurring electromagnetic fields in addition to electromagnetic field **152.** Specified distance **158** may be increased to take into account the possible static electricity and naturally occurring electromagnetic fields of the thunderstorm.

In some illustrative examples, specified distance **158** is a maximum length from high voltage power line **146** while maintaining a pre-defined value for efficiency **126** of recharging system **120** of unmanned aerial vehicle **110.** In some illustrative examples, the pre-defined value for efficiency **126** is a maximum efficiency under current conditions in regions **108.** A maximum value for efficiency **126** is situationally and hardware dependent. For example, efficiency **126** is affected by field strength **176** of high voltage power line **146,** an ambient temperature, and charging settings for rechargeable battery **114.**

In some illustrative examples, specified distance **158** is selected to maintain a charge level of rechargeable battery **114.** In some illustrative examples, specified distance **158** is selected based on field strength **176.**

In some illustrative examples, specified distance **158** is part of flight plan **150** created by flight plan generator **148.** In other illustrative examples, specified distance **158** is determined by controller **180** of unmanned aerial vehicle **110.** Controller **180** is configured to fly unmanned aerial vehicle **110.** In some illustrative examples, controller **180** is configured to fly the unmanned aerial vehicle **110** such that inductor **116** charges rechargeable battery **114** using electromagnetic field **152** of high voltage power line **146** while flying unmanned aerial vehicle **110** specified distance **158** from high voltage power line **146.**

High voltage power line **146** is present in right-of-way **181.** Right-of-way **181** is an area for routing utilities **182,** including high voltage power line **146.** Right-of-way **181** may also be referred to as easement **186.** In some illustrative examples, utilities **182** within the right-of-way are inspected while flying unmanned aerial vehicle **110** specified distance **158** from high voltage power line **146.**

Utilities **182** within right-of-way **181** include utility lines **184** that are at least one of above ground or buried within right-of-way **181.** Utility lines **184** include at least one of high voltage power line **146,** water pipe **187,** waterway **191,** gas pipe **188,** solar panel **189,** or oil pipe **190.**

Although utilities **182** are depicted in right-of-way **181,** utilities **182** outside of right-of-way **181** can be inspected by unmanned aerial vehicle **110** as well. For example, waterway **191** may extend outside of right-of-way **181.** In some illustrative examples, unmanned aerial vehicle **110** inspects utilities **182** outside of right-of-way **181** while unmanned aerial vehicle **110** recharges using high voltage power line **146.** In some illustrative examples, unmanned aerial vehicle **110** inspects waterway **191** outside of right-of-way **181** while recharging using high voltage power line **146.** In other illustrative examples, unmanned aerial vehicle **110** recharges using high voltage power line **146** at least one of before or after inspecting utilities **182** outside of right-of-way **181.** For example, unmanned aerial vehicle **110** recharges using high voltage power line **146** at least one of before or after inspecting waterway **191** outside of right-of-way **181.**

Utilities **182** are inspected using any desirable type of sensor of sensors **138.** Utilities **182** may be inspected using at least one of a proximity sensor, a magnetic field sensor, an IR camera, a visible spectrum camera, or any other desirable type of sensor. For example, high voltage power line **146** can be inspected using field strength sensor **136,** optical sensor **134,** sonar sensor **130,** or radar sensor **132.** Either of waterway **191** or solar panel **189** can be inspected using optical sensor **134.** In some illustrative examples, at least one of water pipe **187,** waterway **191,** gas pipe **188,** and or oil pipe **190** is inspected using optical sensor **134** or a heat sensor, such as an IR camera.

When the mission objective for unmanned aerial vehicle **110** is inspection of utilities **182** in right-of-way **181,** flight plan **150** includes at least a portion along right-of-way **181.** Flying along high voltage power line **146** increases charge level **124** of rechargeable battery **114.** Prior to flying flight plan **150,** rechargeable battery **114** has existing charge **192.** Existing charge **192** is any charge level present in rechargeable battery **114.** Existing charge **192** may be referred to as an "initial charge" when generating flight plan **150.**

In some illustrative examples, unmanned aerial vehicle **110** inspects utilities **182** for at least one of efficiency of operation, an unauthorized condition, an unauthorized event, a leak, or damage. In some illustrative examples, when at least one of an unacceptable efficiency of operation, an unauthorized condition, an unauthorized event, a leak, or damage is detected alert **194** is sent. In some illustrative examples, unmanned aerial vehicle **110** sends alert **194.** In other illustrative examples, computer system **154** sends alert **194.**

Alert **194** includes any desirable content. In some illustrative examples, alert **194** includes a sensor output, such as an image, a sensor reading, or any other desirable type of output. In some illustrative examples, alert **194** takes the form of a report, a light, an indicator, or any other desirable type of alert. In some illustrative examples, alert **194** is configured to bring the unacceptable efficiency of operation, an unauthorized condition, an unauthorized event, a leak, or damage to the attention of a human operator.

The illustration of environment **100** in **Figure 1** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, more than one type of impact prevention sensor **118** may be present on unmanned aerial vehicle **110.** In some illustrative examples, field strength sensor **136** as well as at least one of SONAR sensor **130,** RADAR sensor **132,** or optical sensor **134** are present on unmanned aerial vehicle **110.** In some illustrative examples, recharging system **120** is used as a field strength sensor.

Although only unmanned aerial vehicle **110** is depicted in region **108,** in other illustrative examples, additional unmanned aerial vehicles may operate within region **108.** In some illustrative examples, another unmanned aerial vehicle may travel a set distance from high voltage power line **146.** In these illustrative examples, impact prevention sensor **118** and a respective impact prevention sensor of the additional unmanned aerial vehicle prevent undesirable contact of unmanned aerial vehicle **110** and the additional unmanned aerial vehicle.

In some illustrative examples, flight plan **150** is filed with a reporting service. By filing flight plan **150,** flight plans for additional unmanned aerial vehicles may be created to avoid undesirable contact with unmanned aerial vehicle **110.**

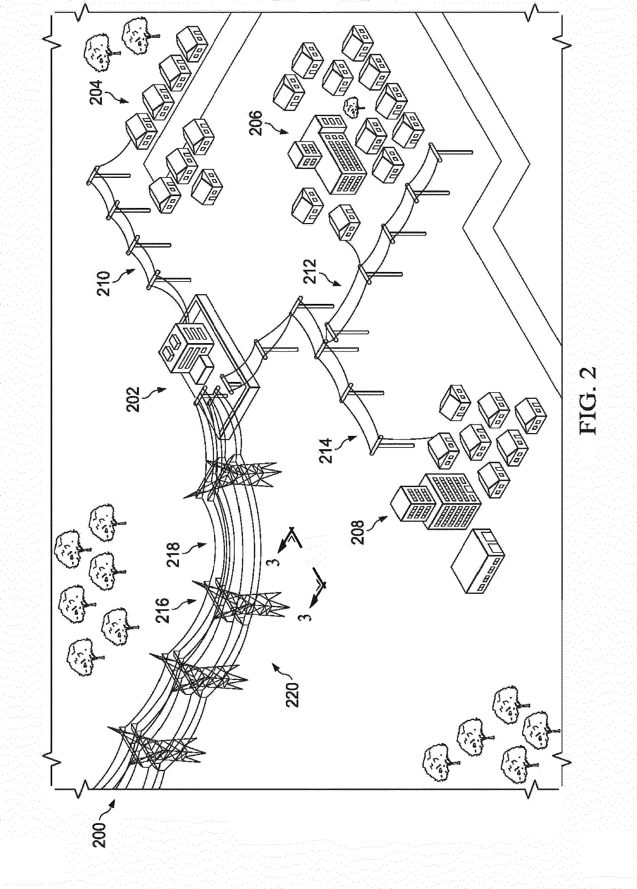

Turning now to **Figure 2****,** an illustration of a region with a high voltage power line is depicted in accordance with an illustrative embodiment. Region **200** is a physical implementation of region **108** of **Figure 1****.** In region **200**, power plant **202** generates electricity that is distributed to neighborhood **204**, neighborhood **206**, and neighborhood **208** through distribution lines **210,** distribution lines **212,** and distribution lines **214** respectively. Region **200** includes transmission line **216.** Transmission line **216** is high voltage power line **218.** High voltage power line **218** is a physical implementation of high voltage power line **146** of **Figure 1****.**

High voltage power line **218** has an electromagnetic force **(EMF)** of sufficient strength to charge an unmanned aerial vehicle. In some illustrative examples, an unmanned aerial vehicle charges a rechargeable battery while flying a specified distance from high voltage power line **218.** In some illustrative examples, an unmanned aerial vehicle charges a rechargeable battery while flying at least a specified distance from high voltage power line **218.**

The illustration of region **200** in **Figure 2** is not meant to imply physical or architectural limitations to the manner in which an illustrative embodiment may be implemented. For example, although high voltage power line **218** are depicted above ground, in some illustrative examples, high voltage power lines are underground.

High voltage power line **218** and accompanying support structures such as transformers, towers, and other structures associated with high voltage power line **218** are within right-of-way **220**. In some non-depicted examples, additional utilities are positioned in right-of-way **220**. Additional utilities may be positioned above or below ground in right-of-way **220**. For example, in a rural environment, underground utilities or pipelines are buried in the same easements as high voltage power lines. In these examples, an unmanned aerial vehicle may monitor the utilities or pipelines while recharging using the high voltage power lines.

The utilities include at least one of a water pipe, a waterway, a gas pipe, a solar panel, an oil pipe, or any other desirable type of utility. In some illustrative examples, the utilities within right-of-way **220** are inspected using a sensor of an unmanned aerial vehicle while flying the unmanned aerial vehicle the specified distance from the high voltage power line **218.**

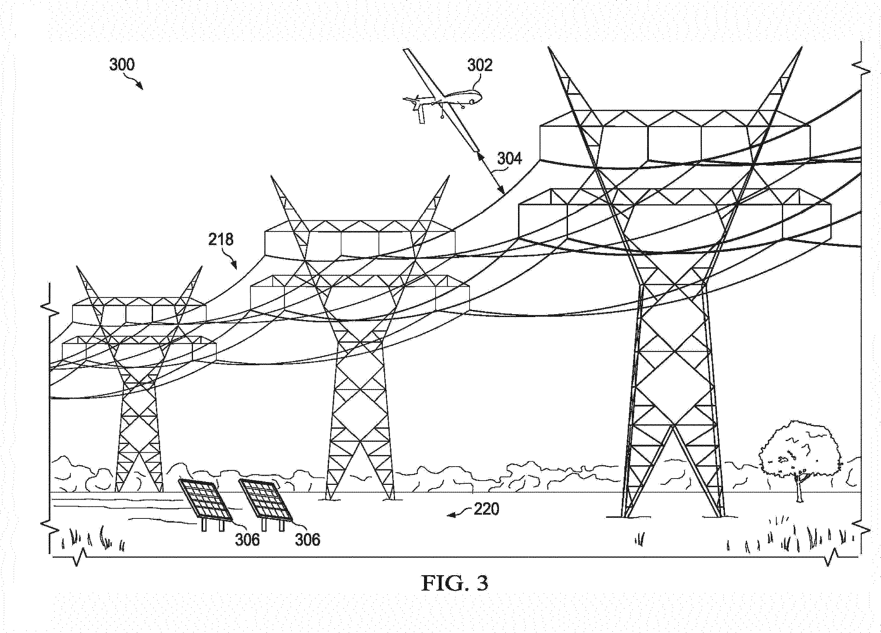

Turning now to **Figure 3****,** an illustration of an unmanned aerial vehicle flying in a region with a high voltage power line is depicted in accordance with an illustrative embodiment. View **300** is a view along direction 3 in **Figure 2****.** In view **300**, unmanned aerial vehicle **302** is flying distance **304** from high voltage power line **218.** Unmanned aerial vehicle **302** is a physical implementation of unmanned aerial vehicle **110** of **Figure 1****.**

In some illustrative examples, distance **304** is a physical implementation of specified distance **158** of **Figure 1****.** In some illustrative examples, distance **304** is up to 200 meters. Distance **304** is selected based upon any desirable characteristics. In some illustrative examples, distance **304** is selected such that distance **304** is a maximum length for unmanned aerial vehicle **302** to have a pre-defined value for recharging efficiency. In some illustrative examples, distance **304** is selected based on weather information for region **200** of **Figure 2****.** In some illustrative examples, distance **304** is selected based on the capabilities of unmanned aerial vehicle **302.** In some illustrative examples, distance **304** is selected to maintain a set amount of power in a rechargeable battery of unmanned aerial vehicle **302**.

As depicted, solar panels **306** are positioned in right-of-way **220**. Although not visible, other utilities, such as water pipes, gas pipes, oil pipes, or other utilities may be buried in right-of-way **220**. In other non-depicted examples other utilities, such as water pipes, waterways, gas pipes, oil pipes, or other utilities may be present above ground in right-of-way **220**.

Unmanned aerial vehicle **302** may be used to inspect utilities within right-of-way **220**. For example, unmanned aerial vehicle **302** may be used to inspect at least one of high voltage power lines **218** or solar panels **306**. When additional utilities are present in right-of-way **220**, unmanned aerial vehicle **302** may inspect the additional utilities present in right-of-way **220**.

A sensor of unmanned aerial vehicle **302** is used to inspect utilities within right-of-way **220**. In some illustrative examples, unmanned aerial vehicle **302** has more than one sensor configured to perform inspections of utilities within a right of way, such as right-of-way **220**. Sensors on unmanned aerial vehicle **302** take any desirable form. In some illustrative examples, at least one of a proximity sensor, a magnetic field sensor, an IR camera, a visible spectrum camera, or any other desirable type of sensor is present on unmanned aerial vehicle **302.** In some illustrative examples, utilities in right-of-way **220** are inspected for at least one of efficiency of operation, an unauthorized condition, an unauthorized event, a leak, or damage.

High voltage power line **218** in right-of-way **220** is inspected in any desirable way. In some illustrative examples, high voltage power line **218** is visually inspected. In these illustrative examples, a visual sensor, such as a camera, is present on unmanned aerial vehicle **302** and used to inspect high voltage power line **218.**

High voltage power line **218** can be visually inspected for at least one of an unauthorized condition, an unauthorized event, or damage. For example, high voltage power line **218** can be visually inspected for an unauthorized line connected to high voltage power line **218.** As another example, high voltage power line **218** can be visually inspected for an unauthorized unmanned aerial vehicle recharging using high voltage power line **218.** As yet a further example, high voltage power line **218** can be visually inspected for damage, such as low hanging lines, disconnected lines, broken supports, or other types of physical damage to high voltage power line **218.**

High voltage power line **218** can be inspected using a magnetic field sensor. For example, high voltage power line **218** can be inspected for an expected strength of a magnetic field. When a lower than expected magnetic field is detected, high voltage power line **218** may have an unauthorized charging event, an undesirable efficiency, or other unauthorized or undesirable condition or event.

In some illustrative examples, utilities buried within right-of-way **220** are inspected using heat detection sensors, such as an IR camera. In some illustrative examples, utilities such as gas, water, or oil are transported at a different temperature than ambient temperature. For example, liquified natural gas is transported at a temperature different than the environmental temperature. When leaks or damage to utilities buried within right-of-way **220** are present, differences in temperature between the utility and the environment can be used to detect the leaks or damage. In some illustrative examples, an unauthorized condition, an unauthorized event, a leak, or damage to buried utilities is inspected visually using a visual camera.

The illustration of view **300** in **Figure 3** is not meant to imply physical or architectural limitations to the manner in which an illustrative embodiment may be implemented. For example, unmanned aerial vehicle **302** is depicted as a fixed wing aircraft. However, in other illustrative examples, an unmanned aerial vehicle may be a rotary unmanned aerial vehicle.

As another example, any desirable type of and quantity of sensors (not depicted) are present on unmanned aerial vehicle **302.** As yet another example, other utilities, such as gas pipes, water pipes, waterways, oil pipes, or other desirable types of utilities are present above ground in right-of-way **220**.

As another example, utilities, such as waterways, may be present outside of right-of-way **220**. In some illustrative examples, utilities outside of right-of-way **220** may be inspected while recharging unmanned aerial vehicle **302**.

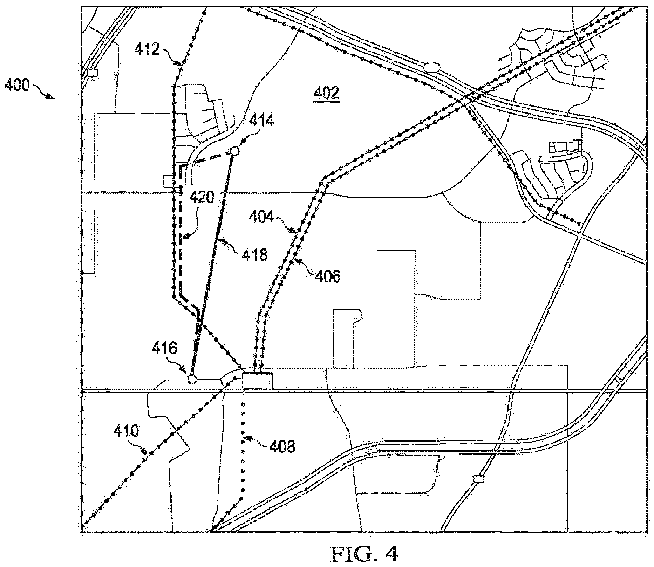

Turning now to **Figure 4****,** an illustration of a map of a region with high voltage power lines is depicted in accordance with an illustrative embodiment. Map **400** is a physical implementation of high voltage map **160** of **Figure 1****.**

In map **400**, region **402** has high voltage power line **404**, high voltage power line **406**, high voltage power line **408**, high voltage power line **410,** and high voltage power line **412.** An unmanned aerial vehicle, such as unmanned aerial vehicle **110** of **Figure 1****,** may fly within region **402.**

As depicted, map **400** has departure point **414** for an unmanned aerial vehicle and arrival point **416.** Flight plan **418** is a shortest path for an unmanned aerial vehicle traveling from departure point **414** to arrival point **416.**

In some illustrative examples, flight plan **420** is created to charge a rechargeable battery of an unmanned aerial vehicle. Flight plan **420** also meets an objective or a destination for an unmanned aerial vehicle. In this illustrative example, flight plan **420** meets a destination, arrival point **416.** Flight plan **420** is an alternative to flight plan **418.** Flight plan **420** flies an unmanned aerial vehicle a specified distance from high voltage power line **412.** Although flight plan **420** is longer than flight plan **418,** in some illustrative examples, a rechargeable battery of the unmanned aerial vehicle may have a greater charge after taking flight plan **420**.

The different components shown in **Figures 2-4** may be combined with components in **Figure 1****,** used with components in **Figure 1****,** or a combination of the two. Additionally, some of the components in **Figures 2-4** may be illustrative examples of how components shown in block form in **Figure 1** can be implemented as physical structures.

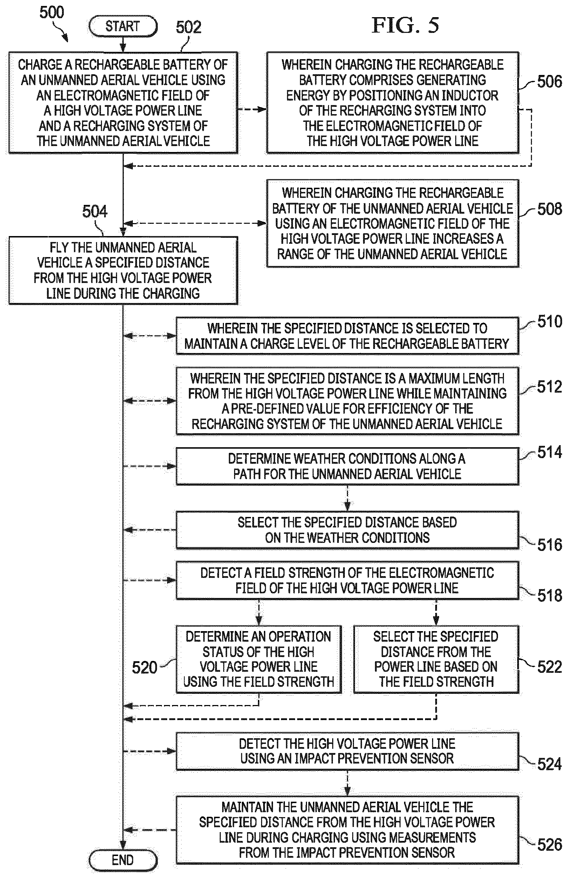

Turning now to **Figure 5****,** an illustration of a flowchart of a method for flying an unmanned aerial vehicle in a region is depicted in accordance with an illustrative embodiment. Method **500** may be implemented in environment **100** of **Figure 1****.** Method **500** may be performed in region **200** of **Figures 2-3****.** Method **500** may be performed in region **402** of **Figure 4****.**

Method **500** charges a rechargeable battery of an unmanned aerial vehicle using an electromagnetic field of a high voltage power line and a recharging system of the unmanned aerial vehicle (operation **502**)**.** Method **500** flies the unmanned aerial vehicle a specified distance from the high voltage power line during the charging (operation **504**). Afterwards the method terminates.

Several optional operations are also depicted in **Figure 5****.** In some illustrative examples, charging the rechargeable battery comprises generating energy by positioning an inductor of the recharging system into the electromagnetic field of the high voltage power line (operation **506**). In some illustrative examples, charging the rechargeable battery of the unmanned aerial vehicle using an electromagnetic field of the high voltage power line increases a range of the unmanned aerial vehicle (operation **508**).

In some illustrative examples, the specified distance is selected to maintain a charge level of the rechargeable battery (operation **510**)**.** In some illustrative examples, the specified distance is a maximum length from the high voltage power line while maintaining a pre-defined value for efficiency of the recharging system of the unmanned aerial vehicle (operation **512**). In some illustrative examples, the pre-defined value for efficiency is a maximum value for efficiency. The efficiency of the recharging system is affected by a field strength of the high voltage power line, an ambient temperature, and charging settings for the rechargeable battery.

In some illustrative examples, method **500** determines weather conditions along a path for the unmanned aerial vehicle (operation **514**). In some illustrative examples, method **500** selects the specified distance based on the weather conditions (operation **516**). For example, the specified distance may be selected based on wind conditions. In some illustrative examples, the specified distance may be greater when wind conditions are greater.

In some illustrative examples, method **500** detects a field strength of the electromagnetic field of the high voltage power line (operation **518**). In some illustrative examples, method **500** determines an operation status of the high voltage power line using the field strength (operation **520**). For example, when the field strength is significantly lower than expected, the high voltage power line may be partially operational or non-operational. In some illustrative examples, when the field strength is significantly lower than expected, the unmanned aerial vehicle may send communications requesting additional inspection or maintenance for the high voltage power line. In some illustrative examples, when the field strength is significantly lower than expected and when the unmanned aerial vehicle has an attached camera, pictures of the high voltage power line may be taken in response to lower than expected field strength.

In some illustrative examples, method **500** selects the specified distance from the power lines based on the field strength (operation **522**). For example, the specified distance may be greater when the field strength is greater.

In some illustrative examples, method **500** detects the high voltage power line using an impact prevention sensor (operation **524**). In some illustrative examples, method **500** maintains the unmanned aerial vehicle the specified distance from the high voltage power line during charging using measurements from the impact prevention sensor (operation **526**). In some illustrative examples, the impact prevention sensor is one of a SONAR sensor, a RADAR sensor, an optical sensor, or a field strength sensor.

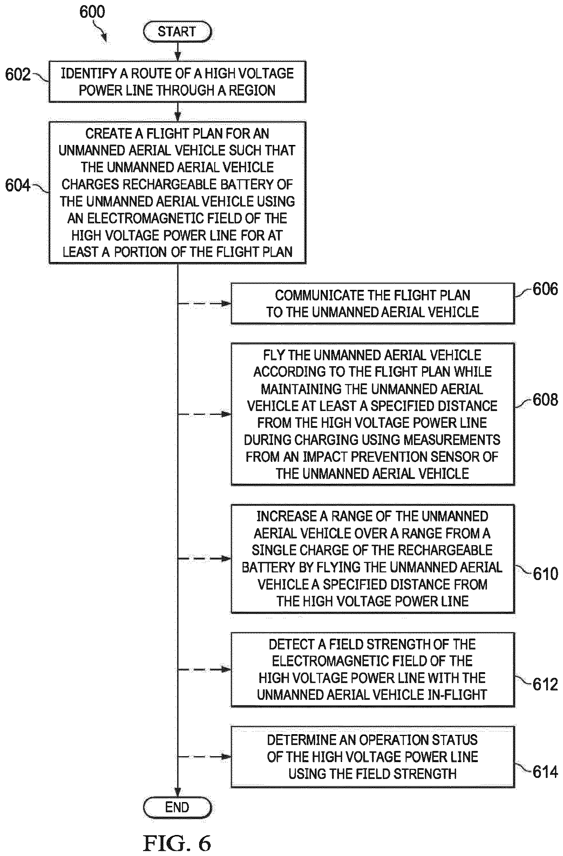

Turning now to **Figure 6****,** an illustration of a flowchart of a method for creating a flight plan for an unmanned aerial vehicle in a region is depicted in accordance with an illustrative embodiment. Method **600** may be implemented in environment **100** of **Figure 1****.** Method **600** may be performed using high voltage map **160** of **Figure 1****.** A flight plan generated by method **600** may be flown within region **200** of **Figures 2-3****.** Method **600** may be performed using a map such as map **400** of **Figure 4****.**

Method **600** identifies a route of a high voltage power line through a region (operation **602**). Method **600** creates a flight plan for an unmanned aerial vehicle such that the unmanned aerial vehicle charges rechargeable battery of the unmanned aerial vehicle using an electromagnetic field of the high voltage power line for at least a portion of the flight plan (operation **604**).

Several optional operations are also depicted in **Figure 6****.** In some illustrative examples, method **600** communicates the flight plan to the unmanned aerial vehicle (operation **606**). In some illustrative examples, method **600** flies the unmanned aerial vehicle according to the flight plan while maintaining the unmanned aerial vehicle at least a specified distance from the high voltage power line during charging using measurements from an impact prevention sensor of the unmanned aerial vehicle (operation **608**).

In some illustrative examples, method **600** increases a range of the unmanned aerial vehicle over a range from a single charge of the rechargeable battery by flying the unmanned aerial vehicle at least a specified distance from the high voltage power line (operation **610**). In some illustrative examples, method **600** detects a field strength of the electromagnetic field of the high voltage power line with the unmanned aerial vehicle in-flight (operation **612**).

In some illustrative examples, method **600** determines an operation status of the high voltage power line using the field strength (operation **614**). For example, when the field strength is significantly lower than expected, the high voltage power line may be partially operational or non-operational. In some illustrative examples, when the field strength is significantly lower than expected, the unmanned aerial vehicle may send communications requesting additional inspection or maintenance for the high voltage power line. In some illustrative examples, when the field strength is significantly lower than expected and when the unmanned aerial vehicle has an attached camera, pictures of the high voltage power line may be taken in response to lower than expected field strength.

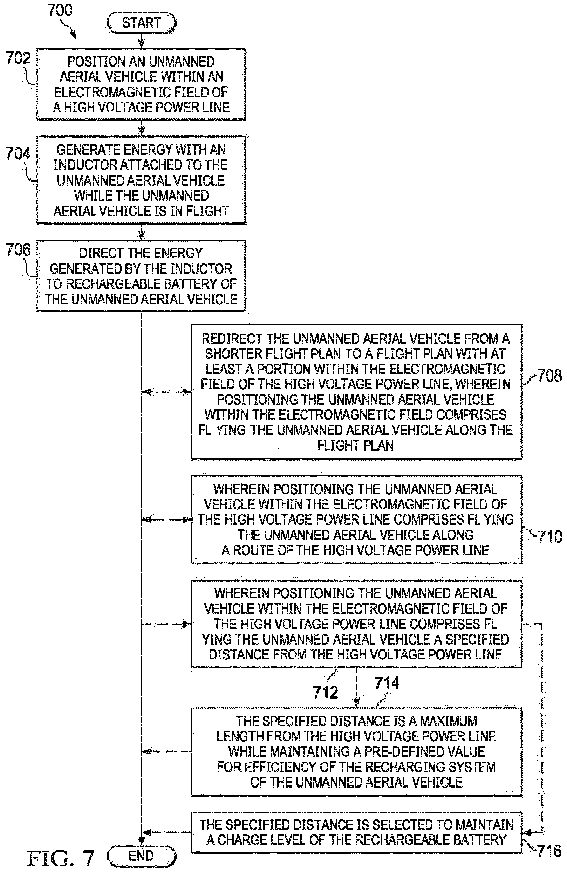

Turning now to **Figure 7****,** an illustration of a flowchart of a method for flying an unmanned aerial vehicle in a region is depicted in accordance with an illustrative embodiment. Method **700** may be implemented using unmanned aerial vehicle **110** of **Figure 1****.** Method **700** may be performed in region **200** of **Figures 2-3** using unmanned aerial vehicle **302**. Method **700** may be performed in region **402** of **Figure 4****.**

Method **700** positions an unmanned aerial vehicle within an electromagnetic field of a high voltage power line (operation **702**). Method **700** generates energy with an inductor attached to the unmanned aerial vehicle while the unmanned aerial vehicle is in flight (operation **704**). Method **700** directs the energy generated by the inductor to rechargeable battery of the unmanned aerial vehicle (operation **706**). Afterwards, the method terminates.

Several optional operations are also depicted in **Figure 7****.** In some illustrative examples, method **700** redirects the unmanned aerial vehicle from a shortest flight plan to a flight plan with at least a portion within an electromagnetic field of the high voltage power line, wherein positioning the unmanned aerial vehicle within the electromagnetic field comprises flying the unmanned aerial vehicle along the flight plan (operation **708**).

In some illustrative examples, the flight plan takes into account supporting structures of the high voltage power line. In some illustrative examples, the flight plan directs the unmanned aerial vehicle around towers holding up the high voltage power line. In some illustrative examples, the flight plan is at least partially parallel to the high voltage power line. In other illustrative examples, the flight plan is within the electromagnetic field of the high voltage power line, but not parallel to the high voltage power line. In some illustrative examples, the flight plan has a non-parallel pattern such as a corkscrew within the electromagnetic field of the high voltage power line.

In some illustrative examples for method **700**, positioning the unmanned aerial vehicle within the electromagnetic field of the high voltage power line comprises flying the unmanned aerial vehicle along a route of the high voltage power line (operation **710**). In some illustrative examples for method **700**, positioning the unmanned aerial vehicle within the electromagnetic field of the high voltage power line comprises flying the unmanned aerial vehicle a specified distance from the high voltage power line (operation **712**). In some illustrative examples, the specified distance is a maximum length from the high voltage power line while maintaining a pre-defined value for efficiency of the recharging system of the unmanned aerial vehicle (operation **714**). In some illustrative examples, the specified distance is selected to maintain a charge level of the rechargeable battery (operation **716**).

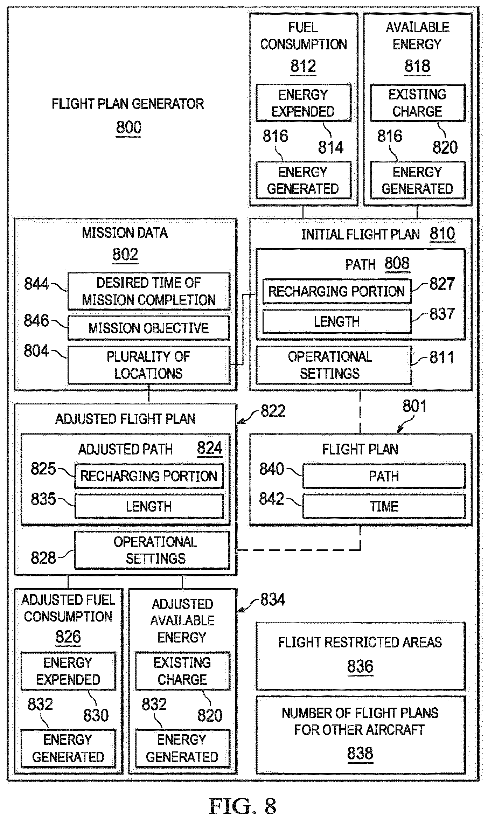

Turning now to **Figure 8****,** an illustration of a block diagram of a flight plan generator is depicted in accordance with an illustrative embodiment. Flight plan generator **800** is an implementation of flight plan generator **148** of **Figure 1****.** Flight plan generator **800** may be used to create a flight plan that may be flown within region **200** of **Figures 2-3****.** A flight plan generated by flight plan generator **800** may be flown by unmanned aerial vehicle **302.** Flight plan generator **800** may generate at least one of flight plan **418** or flight plan **420**. In some illustrative examples, flight plan generator **800** is present on the unmanned aerial vehicle, such as unmanned aerial vehicle **110** of Figure 1.

Flight plan generator **800** utilizes aeronautical data from database **162,** such as high voltage map **160.** Flight plan generator **800** generates flight plan **801.** Flight plan generator **800** receives mission data **802** for an unmanned aerial vehicle, such as unmanned aerial vehicle **110,** including plurality of locations **804** for the unmanned aerial vehicle. Flight plan generator **800** receives mission data **802** from any desirable source, such as database **162** of **Figure 1** or a communications system, such as communications system **156.** In some illustrative examples, database **162** of **Figure 1** contains aeronautical information for at least one of flight restricted areas or utility lines.

In some illustrative examples, plurality of locations **804** includes locations for the unmanned aerial vehicle to travel to or over. In some illustrative examples, plurality of locations **804** includes waypoints for the unmanned aerial vehicle. In some illustrative examples, plurality of locations **804** includes locations for the unmanned aerial vehicle to travel to perform mission objective **846.**

Flight plan generator **800** calculates path **808** for an unmanned aerial vehicle including the plurality of locations **804**. In some illustrative examples, path **808** includes portions for charging the unmanned aerial vehicle using a high voltage power line.

Flight plan generator **800** creates initial flight plan **810** for the unmanned aerial vehicle that includes path **808** and operational settings **811** for the unmanned aerial vehicle. Operational settings **811** includes at least one of a speed, an amount of power sent to motors of the unmanned aerial vehicle, a number of motors to operate on the unmanned aerial vehicle, or any other setting for components of the unmanned aerial vehicle.

Flight plan generator **800** calculates fuel consumption **812** associated with initial flight plan **810.** Fuel consumption **812** includes energy expended **814** and energy generated **816** by the unmanned aerial vehicle. Energy expended **814** includes energy used by the unmanned aerial vehicle to follow path **808** using operational settings **811.** In some illustrative examples, energy expended **814** takes into account weather during the time of initial flight plan **810.** Energy generated **816** includes energy generated by recharging based on proximity to a high voltage power line in following path **808**.

Flight plan generator **800** determines whether fuel consumption **812** is greater than available energy **818** of the unmanned aerial vehicle. Available energy **818** comprises existing charge **820** of the rechargeable battery and energy generated **816** by the unmanned aerial vehicle flying initial flight plan **810.** Existing charge **820** is the charge of at least one rechargeable battery of the unmanned aerial vehicle. Existing charge **820** would limit the range of the unmanned aerial vehicle without recharging. With energy generated **816,** the range of the unmanned aerial vehicle is increased.

Flight plan generator **800** selects initial flight plan **810** as flight plan **801** when the fuel consumption **812** is not greater than available energy **818.** When fuel consumption **812** is greater than available energy **818,** initial flight plan **810** is not selected as flight plan **801.** When fuel consumption **812** is greater than available energy **818,** adjusted flight plan **822** for the unmanned aerial vehicle is created. In some illustrative examples, adjusted flight plan **822** is created by adjusting initial flight plan **810.** Creating adjusted flight plan **822** includes increasing a portion of the flight plan wherein the unmanned aerial vehicle flies a specified distance from a high voltage power line. Adjusted path **824** has recharging portion **825** that has unmanned aerial vehicle flying a specified distance from a high voltage power line. Recharging portion **825** of adjusted path **824** is longer than recharging portion **827** of path **808** that has the unmanned aerial vehicle flying a specified distance from a high voltage power line. By recharging portion **825** being longer than recharging portion **827,** adjusted flight plan **822** has a greater amount of energy in energy generated **832** than energy generated **816** of initial flight plan **810.** In some illustrative examples, flight plan generator **800** is configured to create adjusted flight plan **822** while avoiding flight restricted areas **836.**

Flight plan generator **800** calculates adjusted fuel consumption **826** associated with adjusted flight plan **822.** Adjusted fuel consumption **826** is calculated based on adjusted path **824** and operational settings **828.** Adjusted fuel consumption **826** includes energy expended **830** and energy generated **832** by the unmanned aerial vehicle. Energy expended **830** includes energy used by the unmanned aerial vehicle to follow adjusted path **824** using operational settings **828.** In some illustrative examples, energy expended **830** takes into account weather during the time of adjusted flight plan **822.** Energy generated **832** includes energy generated in any desirable way by the unmanned aerial vehicle. In some illustrative examples, energy generated **832** includes energy generated by recharging based on proximity to a high voltage power line in following adjusted path **824.**

Flight plan generator **800** determines whether adjusted fuel consumption **826** is greater than adjusted available energy **834.** Adjusted available energy **834** comprises existing charge **820** of the rechargeable battery and energy generated **832** by the unmanned aerial vehicle flying adjusted flight plan **822.** Flight plan generator **800** selects adjusted flight plan **822** as flight plan **801** when adjusted fuel consumption **826** is not greater than adjusted available energy **834.**

In some illustrative examples, creating adjusted flight plan **822** creates adjusted path **824** with a greater length **835** than path **808**. In some illustrative examples, length **835** of adjusted path **824** is greater than length **837** of path **808**. Although length **835** of adjusted path **824** is greater than length **837,** when recharging portion **825** is greater than recharging portion **827,** energy generated **832** is greater than energy generation **816.**

In some illustrative examples, flight plan generator **800** creates flight plan **801** to avoid flight restricted areas **836.** In some illustrative examples, flight restricted areas **836** include permanent and temporary flight restricted areas. In some illustrative examples, flight restricted areas **836** includes times for temporarily flight restricted areas. For example, some areas may be temporarily restricted flight areas due to a government official traveling within the area, wildfire suppression activities, sporting events, weather events, or other types of temporary situations. In some illustrative examples, flight plan generator **800** creating adjusted flight plan **822** comprises avoiding flight restricted areas **836.**

In some illustrative examples, flight plan generator **800** determines whether flight plan **801** interferes with a flight plan of another aircraft. The flight plan of another aircraft is one of number of flight plans for other aircraft **838.** Flight plan generator **800** modifies at least one of path **840** or time **842** of flight plan **801** if flight plan **801** interferes with a flight plan of another aircraft.

In some illustrative examples, mission data **802** comprises desired time of mission completion **844** and mission objective **846.** In some illustrative examples, mission objective **846** is utilities inspection, and plurality of locations **804** for the unmanned aerial vehicle in mission data **802** comprises locations for inspecting utilities within a right-of-way. Flight plan generator **800** generates operational settings **811** based on at least one of weather or desired time of mission completion **844.**

In some illustrative examples, flight plan generator **800** generates path **840** taking into account weather. For example, path **840** may have a greater recharging portion along a high voltage power line when the weather is cloudy if the unmanned aerial vehicle is capable of recharging using solar power. In this example, the unmanned aerial vehicle receives less recharging power from solar power than during a sunny time and flight plan generator **800** increases the energy generated from flying a set distance from a high voltage power line to compensate for having less solar power.

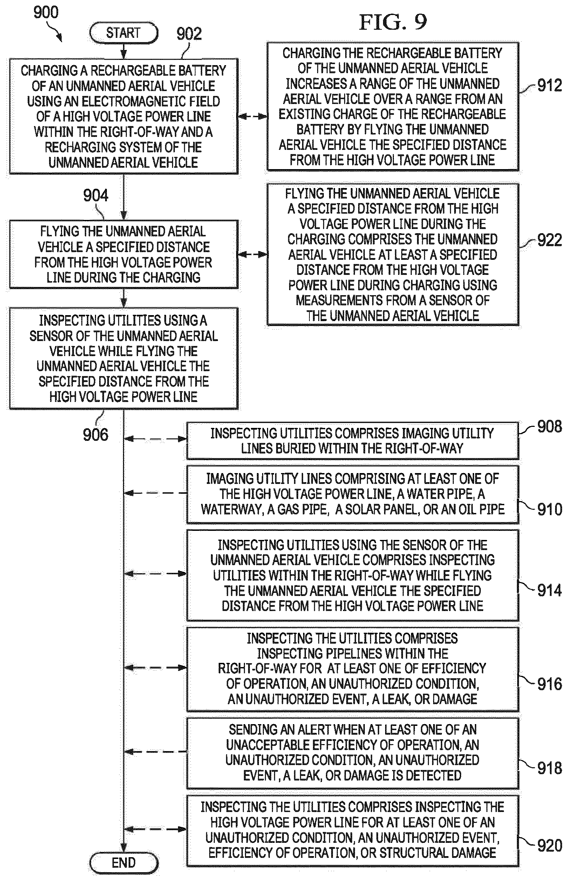

Turning now to **Figure 9****,** an illustration of a flowchart of a method of monitoring utilities within a right-of-way is depicted in accordance with an illustrative embodiment. Method **900** is a method of monitoring utilities within a right-of-way. Method **900** may be implemented using unmanned aerial vehicle **110** of **Figure 1****.** Method **900** may be performed in region **200** of **Figures 2-3** using unmanned aerial vehicle **302.** Method **900** may be performed in region **402** of **Figure 4****.**

Method **900** charges a rechargeable battery of an unmanned aerial vehicle using an electromagnetic field of a high voltage power line within the right-of-way and a recharging system of the unmanned aerial vehicle (operation **902**). Method **900** flies the unmanned aerial vehicle a specified distance from the high voltage power line during the charging (operation **904**). Method **900** inspects utilities using a sensor of the unmanned aerial vehicle while flying the unmanned aerial vehicle the specified distance from the high voltage power line (operation **906**). Afterwards, the method terminates.

In some illustrative examples, inspecting utilities comprises imaging utility lines buried within the right-of-way (operation **908**). In some illustrative examples, imaging utility lines comprising at least one of the high voltage power line, a water pipe, a waterway, a gas pipe, a solar panel, or an oil pipe (operation **910**).

In some illustrative examples, charging the rechargeable battery of the unmanned aerial vehicle increases a range of the unmanned aerial vehicle over a range from an existing charge of the rechargeable battery by flying the unmanned aerial vehicle the specified distance from the high voltage power line (operation **912**). In some illustrative examples, a length of the right-of-way is greater than the range of the unmanned aerial vehicle from an existing charge of the rechargeable battery, and method **900** further comprises inspecting the utilities along the length of the right-of-way while flying the unmanned aerial vehicle, wherein the unmanned aerial vehicle is capable of inspecting the utilities along the length of the right-of-way without landing the unmanned aerial vehicle. In some illustrative examples, a length of the right-of-way is greater than the range of the unmanned aerial vehicle from an existing charge of the rechargeable battery, and method **900** further comprises inspecting the utilities along the length of the right-of-way without stopping inspection of the utilities due to recharging of the unmanned aerial vehicle.

In some illustrative examples, inspecting the utilities using the sensor of the sensor of the unmanned aerial vehicle comprises inspecting utilities within the right-of-way while flying the unmanned aerial vehicle the specified distance from the high voltage power line (operation **914**). In some illustrative examples, inspecting the utilities comprises inspecting pipelines within the right-of-way for at least one of efficiency of operation, an unauthorized condition, an unauthorized event, a leak, or damage (operation **916**). In some illustrative examples, method **900** further comprises sending an alert when at least one of an unacceptable efficiency of operation, an unauthorized condition, an unauthorized event, a leak, or damage is detected (operation **918**).

In some illustrative examples, method **900** further comprises inspecting the utilities comprises inspecting the high voltage power line for at least one of an unauthorized condition, an unauthorized event, efficiency of operation, or structural damage (operation **920**). In some illustrative examples, flying the unmanned aerial vehicle a specified distance from the high voltage power line during the charging comprises the unmanned aerial vehicle at least a specified distance from the high voltage power line during charging using measurements from a sensor of the unmanned aerial vehicle (operation **922**).

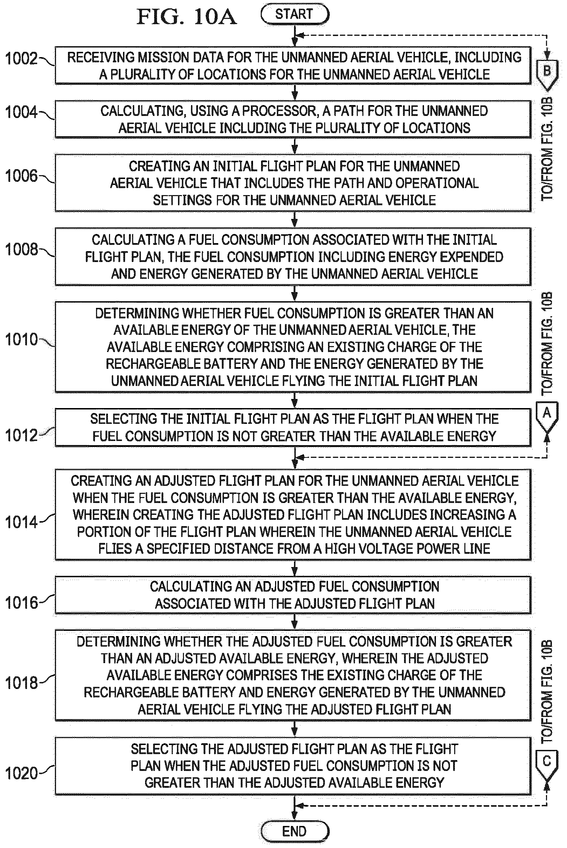

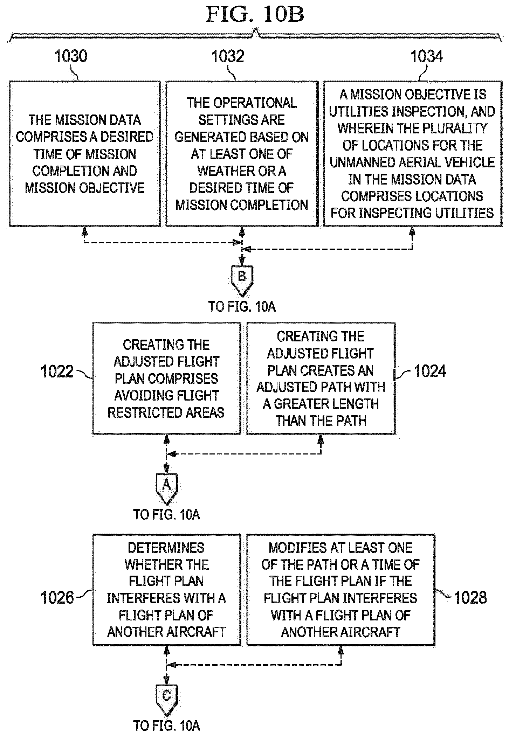

Turning now to **Figures 10A** and **10B**, an illustration of a flowchart of a method of generating a flight plan for an unmanned aerial vehicle including charging a rechargeable battery of the unmanned aerial vehicle is depicted in accordance with an illustrative embodiment. Method **1000** may generate flight plan **150** for unmanned aerial vehicle **110** of **Figure 1****.** Method **1000** may be performed to generate a flight plan for unmanned aerial vehicle **302** to fly within region **200** of **Figures 2-3****.** Method **1000** may be performed to generate at least one of flight plan **418** or flight plan **420** of **Figure 4****.**

Method **1000** generates a flight plan for an unmanned aerial vehicle including charging a rechargeable battery of the unmanned aerial vehicle. Method **1000** receives mission data for the unmanned aerial vehicle, including a plurality of locations for the unmanned aerial vehicle (operation **1002**).

Method **1000** calculates, using a processor, a path for the unmanned aerial vehicle including the plurality of locations (operation **1004**).

Method **1000** creates an initial flight plan for the unmanned aerial vehicle that includes the path and operational settings for the unmanned aerial vehicle (operation **1006**).

Method **1000** calculates a fuel consumption associated with the initial flight plan, the fuel consumption including energy expended and energy generated by the unmanned aerial vehicle (operation **1008**).

Method **1000** determines whether fuel consumption is greater than an available energy of the unmanned aerial vehicle, the available energy comprising an existing charge of the rechargeable battery and the energy generated by the unmanned aerial vehicle flying the initial flight plan (operation **1010**).

Method **1000** selects the initial flight plan as the flight plan when the fuel consumption is not greater than the available energy (operation **1012**).

Method **1000** creates an adjusted flight plan for the unmanned aerial vehicle when the fuel consumption is greater than the available energy, wherein creating the adjusted flight plan includes increasing a portion of the flight plan wherein the unmanned aerial vehicle flies a specified distance from a high voltage power line (operation **1014**).

Method **1000** calculates an adjusted fuel consumption associated with the adjusted flight plan (operation **1016**).

Method **1000** determines whether the adjusted fuel consumption is greater than an adjusted available energy, wherein the adjusted available energy comprises the existing charge of the rechargeable battery and energy generated by the unmanned aerial vehicle flying the adjusted flight plan (operation **1018**).

Method **1000** selects the adjusted flight plan as the flight plan when the adjusted fuel consumption is not greater than the adjusted available energy (operation **1020**). Afterwards, the method terminates.

**Figure 10B** depicts optional operations for method **1000.** In some illustrative examples, creating the adjusted flight plan comprises avoiding flight restricted areas (operation **1022**). The illustrative examples take into account that flight restricted areas may be permanent geographic areas. The illustrative examples take into account that flight restricted areas may change based on time. In some illustrative examples, method **1000** avoids flight restricted areas based on an intended date and time of the flight plan. In some illustrative examples, creating the adjusted flight plan creates an adjusted path with a greater length than the path (operation **1024**).

In some illustrative examples, method **1000** determines whether the flight plan interferes with a flight plan of another aircraft (operation **1026**). The other aircraft may be any type of aircraft, such as a commercial aircraft, military aircraft, manned aircraft, or an unmanned aircraft. In some illustrative examples, method **1000** modifies at least one of the path or a time of the flight plan if the flight plan interferes with a flight plan of another aircraft (operation **1028**).

In some illustrative examples, the mission data comprises a desired time of mission completion and mission objective (operation **1030**). The mission objective includes any desirable goal such as utilities inspection, area surveillance, package delivery, wildlife or livestock tracking, or any other desirable goal.

In some illustrative examples, the operational settings are generated based on at least one of weather or a desired time of mission completion (operation **1032**). For example, a speed of travel, an amount of power sent to a number of motors, or any other operational settings for the unmanned aerial vehicle take into account the weather. For example, an amount of power may need to be increased to the motors of an unmanned aerial vehicle to take into account wind speed. As another example, the speed of the unmanned aerial vehicle may be increased or decreased based on a desired time of mission completion.

In some illustrative examples, a mission objective is utilities inspection, and wherein the plurality of locations for the unmanned aerial vehicle in the mission data comprises locations for inspecting utilities (operation **1034**). In some illustrative examples, the plurality of locations for the unmanned aerial vehicle in the mission data comprises locations for inspecting utilities within a right-of-way.

The flowcharts and block diagrams in the different depicted embodiments illustrate the architecture, functionality, and operation of some possible implementations of apparatus and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added, in addition to the illustrated blocks, in a flowchart or a block diagram.

In some illustrative examples, not all blocks of method **500,** method **600,** and method **700** are performed. For example, each of method **500,** method **600**, method **700**, method **900**, and method **1000** have optional steps described. For example, operations **908** through **922** may be optional. As another example, operations **1022** through **1034** may be optional.

The illustrative examples allow for recharging of unmanned aerial vehicles (UAVs) while flying by using the Electro Magnetic Field (EMF) that radiates from high power lines to generate a charging current on through use of an inductor (coil) and charging circuitry on board the UAV. Whereas normally UAVs avoid flying near high voltage power lines due to collision potential, if equipped with a map and sensors as in the illustrative examples, UAVs can avoid colliding with the power lines or towers. Thus, a UAV can fly near enough to a power line to recharge its batteries via an inductor and charging circuitry, while staying at a reasonably safe distance from the towers. In these illustrative examples, recharging using an EMF may be used by any type of unmanned aerial vehicles, including rotary UAVs or fixed wing UAVs.

In some of the illustrative examples, a flight planning system optimizes flight plans to enable UAVs to fly along power lines for part of their routes of flight to recharge or extend their flights. In some illustrative examples, a guidance system of a UAV may use a voltage reading to further gauge distance to the power lines in addition to a map of power line towers. Further, the UAV could be programmed to loiter around a specified area of power lines until re-charged. For example, a UAV may hover near a power line to recharge. In some illustrative examples, a flight plan (otherwise known as a flight path) is plotted along the power lines to facilitate long distance routes.

This would enable a UAV to fly along the power line, taking charge to extend its useful range while monitoring both the power line and underground pipeline to check for leaks, damage, or sabotage. The UAV could even detect voltage transformer issues when a power line fails to provide a strong enough electrical field to facilitate recharging in-flight. By using high voltage power lines and an inductor, charging power can be obtained at a safe distance.

An illustrative embodiment of the present disclosure provides a method. A rechargeable battery of an unmanned aerial vehicle is charged using an electromagnetic field of a high voltage power line and a recharging system of the unmanned aerial vehicle. The unmanned aerial vehicle is flown a specified distance from the high voltage power line during the charging.

In some illustrative examples, the specified distance is a maximum length from the high voltage power line while maintaining a pre-defined value for efficiency of the recharging system of the unmanned aerial vehicle. In some illustrative examples, the specified distance is selected to maintain a charge level of the rechargeable battery. In some illustrative examples, charging the rechargeable battery comprises generating energy by positioning an inductor of the recharging system into the electromagnetic field of the high voltage power line.

In some illustrative examples, the method further comprises determining weather conditions along a path for the unmanned aerial vehicle; and selecting the specified distance based on the weather conditions. In some illustrative examples, the method further comprises detecting a field strength of the electromagnetic field of the high voltage power line; and determining an operation status of the high voltage power line using the field strength.

In some illustrative examples, the method further comprises detecting a field strength of the electromagnetic field of the high voltage power line; and selecting the specified distance from the high voltage power line based on the field strength. In some illustrative examples, charging the rechargeable battery of the unmanned aerial vehicle using an electromagnetic field of the high voltage power line increases a range of the unmanned aerial vehicle.

In some illustrative examples, the method further comprises detecting the high voltage power line using an impact prevention sensor; and maintaining the unmanned aerial vehicle the specified distance from the high voltage power line during charging using measurements from the impact prevention sensor. In some illustrative examples, the impact prevention sensor is one of a SONAR sensor, a RADAR sensor, an optical sensor, or a field strength sensor.

Another illustrative embodiment of the present disclosure provides a method. A route of a high voltage power line through a region is identified. A flight plan for an unmanned aerial vehicle is created such that the unmanned aerial vehicle charges a rechargeable battery of the unmanned aerial vehicle using an electromagnetic field of the high voltage power line for at least a portion of the flight plan.

In some illustrative examples, the method further comprises communicating the flight plan to the unmanned aerial vehicle; and flying the unmanned aerial vehicle according to the flight plan while maintaining the unmanned aerial vehicle at least a specified distance from the high voltage power line during charging using measurements from an impact prevention sensor of the unmanned aerial vehicle. In some illustrative examples, the method further comprises increasing a range of the unmanned aerial vehicle over a range from a single charge of the rechargeable battery by flying the unmanned aerial vehicle the specified distance from the high voltage power line. In some illustrative examples, the method further comprises detecting a field strength of the electromagnetic field of the high voltage power line with the unmanned aerial vehicle in-flight; and determining an operation status of the high voltage power line using the field strength.

A further illustrative embodiment of the present disclosure provides a method. An unmanned aerial vehicle is positioned within an electromagnetic field of a high voltage power line. Energy is generated with an inductor attached to the unmanned aerial vehicle. The energy generated by the inductor is directed to a rechargeable battery of the unmanned aerial vehicle.

In some illustrative examples, the method further comprises redirecting the unmanned aerial vehicle from a shorter flight plan to a flight plan with at least a portion within the electromagnetic field of the high voltage power line, wherein positioning the unmanned aerial vehicle within the electromagnetic field comprises flying the unmanned aerial vehicle along the flight plan. In some illustrative examples, positioning the unmanned aerial vehicle within the electromagnetic field of the high voltage power line comprises flying the unmanned aerial vehicle along a route of the high voltage power line. In some illustrative examples, positioning the unmanned aerial vehicle within the electromagnetic field of the high voltage power line comprises flying the unmanned aerial vehicle a specified distance from the high voltage power line.

In some illustrative examples, the specified distance is a maximum length from the high voltage power line while maintaining a pre-defined value for efficiency of a recharging system of the unmanned aerial vehicle. In some illustrative examples, the specified distance is selected to maintain a charge level of the rechargeable battery.

A yet further illustrative embodiment of the present disclosure provides an unmanned aerial vehicle. The unmanned aerial vehicle comprises a rechargeable battery, an inductor electrically connected to the rechargeable battery, and an impact prevention sensor.

In some illustrative examples, the impact prevention sensor is one of a SONAR sensor, a RADAR sensor, an optical sensor, or a field strength sensor. In some illustrative examples, the unmanned aerial vehicle further comprises a controller configured to fly the unmanned aerial vehicle such that the inductor charges the rechargeable battery using an electromagnetic field of a high voltage power line while flying the unmanned aerial vehicle a specified distance from the high voltage power line.

Any discussion of documents, acts, materials, devices, articles or the like which has been included in the present disclosure is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method of monitoring utilities, the method comprising:
charging (502) a rechargeable battery (114) of an unmanned aerial vehicle (110) using an electromagnetic field (152) of a high voltage power line (146) and a recharging system (120) of the unmanned aerial vehicle (110);
flying (504) the unmanned aerial vehicle (110) along the high voltage power line (146) and at a specified distance (158) from the high voltage power line (146) during the charging, and along a route of the high voltage power line (146);
inspecting utilities (182) using a sensor (138) of the unmanned aerial vehicle (110) while flying the unmanned aerial vehicle (110) along the high voltage power line (146) and at the specified distance (158) from the high voltage power line;
the method further comprising:
detecting (524) the high voltage power line (146) using an impact prevention sensor (118); and
maintaining (526) the unmanned aerial vehicle (110) the specified distance (158) from the high voltage power line (146) during charging using measurements (128) from the impact prevention sensor (118).

2. The method of claim 1, wherein flying the unmanned aerial vehicle comprises flying the unmanned aerial vehicle according to a flight plan.

3. The method of claim 2, wherein positioning the unmanned aerial vehicle within the electromagnetic field comprises flying the unmanned aerial vehicle along the flight plan.

4. The method of claim 1, wherein inspecting utilities comprises imaging buried utility lines (184).

5. The method of claim 1, wherein inspecting utilities comprises imaging utilities comprising at least one of the high voltage power line (106), a water pipe (187), a waterway (191), a gas pipe (188), a solar panel (189), or an oil pipe (190).

6. The method of any one of the preceding claims, wherein charging the rechargeable battery of the unmanned aerial vehicle increases a range (112) of the unmanned aerial vehicle over a range (112) from an existing charge of the rechargeable battery by flying the unmanned aerial vehicle the specified distance from the high voltage power line.

7. The method of any one of the preceding claims, wherein the impact prevention sensor (118) is one of a SONAR sensor (130), a RADAR sensor (132), an optical sensor (134), or a field strength sensor (136).

8. The method of any one of the preceding claims, wherein inspecting the utilities comprises inspecting pipelines for at least one of efficiency of operation, an unauthorized condition, an unauthorized event, a leak, or damage.

9. The method of claim 8 further comprising:
sending an alert when at least one of an unacceptable efficiency of operation, an unauthorized condition, an unauthorized event, a leak, or damage is detected.

10. The method of any one of the preceding claims, wherein inspecting the utilities comprises inspecting the high voltage power line for at least one of an unauthorized condition, an unauthorized event, efficiency of operation, or structural damage.

11. The method of any one of the preceding claims, wherein flying the unmanned aerial vehicle a specified distance from the high voltage power line during the charging comprises the unmanned aerial vehicle at least a specified distance from the high voltage power line during charging using measurements from a sensor (138) of the unmanned aerial vehicle.

## Patentansprüche

1. Verfahren zur Überwachung von Versorgungseinrichtungen, wobei das Verfahren Folgendes umfasst:
Laden (502) einer wiederaufladbaren Batterie (114) eines unbemannten Luftfahrzeugs (110) unter Verwendung eines elektromagnetischen Felds (152) einer Hochspannungsleitung (146) und eines Wiederaufladesystems (120) des unbemannten Luftfahrzeugs (110);
Fliegen (504) des unbemannten Luftfahrzeugs (110) entlang der Hochspannungsleitung (146) und in einem bestimmten Abstand (158) von der Hochspannungsleitung (146) während des Ladens sowie entlang einer Strecke der Hochspannungsleitung (146);
Untersuchen von Versorgungseinrichtungen (182) unter Verwendung eines Sensors (138) des unbemannten Luftfahrzeugs (110), während das unbemannte Luftfahrzeug (110) entlang der Hochspannungsleitung (146) und in dem bestimmten Abstand (158) von der Hochspannungsleitung fliegt;
wobei das Verfahren ferner Folgendes umfasst:
Erfassen (524) der Hochspannungsleitung (146) unter Verwendung eines Aufprallverhinderungssensors (118); und
Halten (526) des unbemannten Luftfahrzeugs (110) in dem bestimmten Abstand (158) von der Hochspannungsleitung (146) während des Ladens unter Verwendung von Messungen (128) des Aufprall verhinderungs sensors (118).

2. Verfahren nach Anspruch 1, wobei das Fliegen des unbemannten Luftfahrzeugs das Fliegen des unbemannten Luftfahrzeugs gemäß eines Flugplans umfasst.

3. Verfahren nach Anspruch 2, wobei das Positionieren des unbemannten Luftfahrzeugs innerhalb des elektromagnetischen Felds das Fliegen des unbemannten Luftfahrzeugs entlang des Flugplans umfasst.

4. Verfahren nach Anspruch 1, wobei das Untersuchen von Versorgungseinrichtungen das Abbilden von unterirdischen Versorgungsleitungen (184) umfasst.

5. Verfahren nach Anspruch 1, wobei das Untersuchen von Versorgungseinrichtungen das Abbilden von Versorgungseinrichtungen umfasst, die die Hochspannungsleitung (106), eine Wasserleitung (187), einen Wasserweg (191), eine Gasleitung (188), ein Solarpanel (189) und/oder eine Ölleitung (190) umfassen.

6. Verfahren nach einem der vorhergehenden Ansprüche, wobei das Laden der wiederaufladbaren Batterie des unbemannten Luftfahrzeugs eine Reichweite (112) des unbemannten Luftfahrzeugs über eine Reichweite (112) von einer vorhandenen Ladung der wiederaufladbaren Batterie erhöht, indem das unbemannte Luftfahrzeug in dem bestimmten Abstand von der Hochspannungsleitung geflogen wird.

7. Verfahren nach einem der vorhergehenden Ansprüche, wobei es sich bei dem Aufprallverhinderungssensor (118) um einen SONAR-Sensor (130), einen RADAR-Sensor (132), einen optischen Sensor (134) oder einen Feldstärkesensor (136) handelt.

8. Verfahren nach einem der vorhergehenden Ansprüche, wobei das Untersuchen der Versorgungseinrichtungen das Untersuchen von Rohrleitungen auf Betriebseffizienz, einen nicht autorisierten Zustand, ein nicht autorisiertes Ereignis, ein Leck und/oder eine Beschädigung umfasst.

9. Verfahren nach Anspruch 8, das ferner Folgendes umfasst:
Senden einer Warnung, wenn eine inakzeptable Betriebseffizienz, ein nicht autorisierter Zustand, ein nicht autorisiertes Ereignis, ein Leck und/oder eine Beschädigung festgestellt wird.

10. Verfahren nach einem der vorhergehenden Ansprüche, wobei das Untersuchen der Versorgungseinrichtungen das Untersuchen der Hochspannungsleitung auf einen nicht autorisierten Zustand, ein nicht autorisiertes Ereignis, eine Betriebseffizienz und/oder eine strukturelle Beschädigung umfasst.

11. Verfahren nach einem der vorhergehenden Ansprüche, wobei das Fliegen des unbemannten Luftfahrzeugs in einem bestimmten Abstand von der Hochspannungsleitung während des Ladens das Fliegen des unbemannten Luftfahrzeugs in mindestens einem bestimmten Abstand von der Hochspannungsleitung während des Ladens umfasst, und zwar unter Verwendung von Messungen von einem Sensor (138) des unbemannten Luftfahrzeugs.

## Revendications

1. Procédé de surveillance d'installations, le procédé comprenant les opérations consistant à :
charger (502) une batterie rechargeable (114) d'un véhicule aérien sans pilote (110) au moyen d'un champ électromagnétique (152) d'une ligne électrique à haute tension (146) et d'un système de recharge (120) du véhicule aérien sans pilote (110),
faire voler (504) le véhicule aérien sans pilote (110) le long de la ligne électrique à haute tension (146) et à une distance spécifique (158) de la ligne électrique à haute tension (146) pendant la charge, et le long d'un tracé de la ligne électrique à haute tension (146),
inspecter des installations (182) au moyen d'un détecteur (138) du véhicule aérien sans pilote (110) pendant que le véhicule aérien sans pilote (110) vole le long de la ligne électrique à haute tension (146) et à ladite distance spécifique (158) de la ligne électrique à haute tension ;
le procédé comprenant en outre :
la détection (524) de la ligne électrique à haute tension (146) au moyen d'un détecteur de prévention d'impact (118), et
le maintien (526) du véhicule aérien sans pilote (110) à ladite distance spécifique (158) de la ligne électrique à haute tension (146) pendant la charge grâce à des mesures (128) issues du détecteur de prévention d'impact (118).

2. Procédé selon la revendication 1, dans lequel l'opération consistant à faire voler le véhicule aérien sans pilote comprend le vol du véhicule aérien sans pilote conformément à un plan de vol.

3. Procédé selon la revendication 2, dans lequel le positionnement du véhicule aérien sans pilote dans le champ électromagnétique comprend le vol du véhicule aérien sans pilote suivant le plan de vol.

4. Procédé selon la revendication 1, dans lequel l'inspection des installations comprend la représentation en images de lignes et conduites enfouies (184).

5. Procédé selon la revendication 1, dans lequel l'inspection des installations comprend la représentation en images desdites installations, qui comprennent la ligne électrique à haute tension (106), une conduite d'eau (187), un courant d'eau (191), une conduite de gaz (188), un panneau solaire (189) et/ou une conduite de pétrole (190).

6. Procédé selon l'une quelconque des revendications précédentes, dans lequel l'opération consistant à charger la batterie rechargeable du véhicule aérien sans pilote accroît l'autonomie (112) du véhicule aérien sans pilote au-dessus de l'autonomie (112) procurée par la charge existante de la batterie rechargeable grâce au vol du véhicule aérien sans pilote à ladite distance spécifique de la ligne électrique à haute tension.

7. Procédé selon l'une quelconque des revendications précédentes, dans lequel le détecteur de prévention d'impact (118) est un détecteur de type SONAR (130), un détecteur de type RADAR (132), un détecteur optique (134) ou un détecteur d'intensité de champ (136).

8. Procédé selon l'une quelconque des revendications précédentes, dans lequel l'inspection des installations comprend l'inspection de conduites relativement à leur rendement en fonctionnement, à un état non permis, un événement non permis, une fuite et/ou une dégradation.

9. Procédé selon la revendication 8, comprenant en outre :
l'envoi d'une alerte lorsqu'un rendement inacceptable en fonctionnement, un état non permis, un événement non permis, une fuite et/ou une dégradation sont détectés.

10. Procédé selon l'une quelconque des revendications précédentes, dans lequel l'inspection des installations comprend l'inspection de la ligne électrique à haute tension relativement à un état non permis, un événement non permis, son rendement en fonctionnement et/ou une dégradation structurelle.

11. Procédé selon l'une quelconque des revendications précédentes, dans lequel l'opération consistant à faire voler le véhicule aérien sans pilote à une distance spécifique de la ligne électrique à haute tension pendant la charge comprend le vol du véhicule aérien sans pilote à au moins une distance spécifique de la ligne électrique à haute tension pendant la charge grâce à des mesures issues d'un détecteur (138) du véhicule aérien sans pilote.
